# EUROPÄISCHE PATENTSCHRIFT

(11) **EP 1 344 370 B1**
(45) Veröffentlichungstag und Bekanntmachung des Hinweises auf die Patenterteilung: **30.07.2008**
(21) Anmeldenummer: 01271959.7
(22) Anmeldetag: 21.11.2001
(51) Int. Cl.: H04L 29/06, G06F 17/30, H04L 29/08, H04M 3/493

(54) **KOMMUNIKATIONSANORDNUNG UND VERFAHREN FÜR KOMMUNIKATIONSSYSTEME MIT INTERAKTIVER SPRACHFUNKTION**
COMMUNICATIONS ARRANGEMENT AND METHOD FOR COMMUNICATIONS SYSTEMS HAVING AN INTERACTIVE VOICE FUNCTION
SYSTEME DE COMMUNICATION ET PROCEDE POUR SYSTEMES DE COMMUNICATION A FONCTION VOCALE INTERACTIVE

(30) Priorität: 22.12.2000 DE 10064661
(43) Veröffentlichungstag der Anmeldung: 17.09.2003
(73) Patentinhaber: SIEMENS AKTIENGESELLSCHAFT, 80333 München (DE)
(72) Erfinder: AMANN, Nathalie, F-22560 Trebeurden (FR); STRULLU, Laurent, F-22560 Trebeurden (FR); HUE, Laurent, F-22300 Lannion (FR); PETION, Romaric, F-22300 Lannion (FR)
(86) Internationale Anmeldenummer: PCT/DE2001/004373
(87) Internationale Veröffentlichungsnummer: WO 2002/052810

(56) Entgegenhaltungen:
- EP-A- 0 859 500
- WO-A-01/02997
- WO-A-01/45354
- DE-A- 19 856 357
- GOOSE S ET AL: "Enhancing Web accessibility via the Vox Portal and a Web-hosted dynamic HTML ?VoxML converter" COMPUTER NETWORKS, ELSEVIER SCIENCE PUBLISHERS B.V., AMSTERDAM, NL, Bd. 33, Nr. 1-6, Juni 2000 (2000-06), Seiten 583-592, XP004304793 ISSN: 1389-1286

## Beschreibung

Seit geraumer Zeit gibt es vermehrt Anstrengungen, neben dem bildschirmorientierten Zugang zu Informationen auf Datenträgern einen sprachorientierten Zugang zu ermöglichen. Ein typisches Szenario eines solchen Zugangs ist beispielsweise die visuelle Darstellung eines Webinhalts, durch den mit Sprachbefehlen navigiert werden kann.

Die Verbindung von sprach- und bildschirmorientierten Ein- und Ausgaben erfordert zusätzlich zu den entsprechenden Vorrichtungen für Ein- und Ausgabe, z.B. Tastatur, Bildschirm, Mikrophon und Lautsprecher, eine geeignete Verarbeitung und Umsetzung der transportierten Informationen. Vor allem die Verarbeitung der Sprachinformation erfordert einen beträchtlichen Aufwand. Funktionen wie die Umwandlung von Text in Sprache und Spracherkennung sind sehr aufwendig bezüglich der nötigen Ressourcen an Speicherplatz und Rechenleistung. Deshalb werden ressourcenintensive Funktionen üblicherweise nur in eingeschränkter Form auf Endgeräten implementiert.

Der Erfindung liegt das Problem zugrunde, einen sprachorientierten Zugang zu Informationen auf Datenträgern zu ermöglichen, der nicht den üblichen Ressourcenbeschränkungen unterworfen ist.

Das Problem wird durch eine Kommunikationsanordnung nach Anspruch 1 mit einem Internentendgerät nach Anspruch 5 und einer Multimediaplattform nach Anspruch 7 und einem Verfahren nach Anspruch 9 gelöst.

Im Artikel 'Enhancing Web accessibility via the Vox Portal and a Web-hosted dynamic HTML <-> VoxML converter' (Comp.Networks, Elsevier, Amsterdam, NL, Bd.33, 06-2000) wird eine Kommunikationsanordnung veröffentlicht, mit einem Webserver, der mit einer Multimediaplatform und einem Internetendgerät verbindbar ist, mit zumindest einem Sprachagenten in der Multimediaplatform und im Internetendgerät für den direkten Kommunikationsaustausch von Sprachinformationen, mit zumindest einem Kommunikations-Agenten im Internetendgerät zum wechselseitigen Beeinflussen von Bearbeitungsinformationen der sprachorientierten Webseiteninformationen.

Bei der erfindungsgemäßen Kommunikationsanordnung bzw. dem erfindungsgemäßen Verfahren ist in der Multimediaplattform und im Internentendgerät ein Sprachagent für den direkten Kommunikationsaustausch von Sprachinformationen vorgesehen. Zudem ist ein Kommunikations-Agent im Internetendgerät zur wechselseitigen Beeinflussen von Bearbeitungsfunktionen der sprachorientierten Webseiteninformationen und zur Synchronisation der sprachorientierten und der bildschirmorientierten Webseiteninformationen durch die Übermittelung von Steuer- und Dateninformationen vorgesehen - Anspruch 1 und 9. Die Kommunikationsanordnung und das Verfahren haben den Vorteil, dass ressourcenintensive Sprachbearbeitungsfunktionen von der Multimediaplattform wahrgenommen werden und damit Sprachbearbeitung und ein sprachorientierter Zugriff auf Webseiteninformationen unabhängig von der Leistungsfähigkeit des Internentendgeräts realisiert werden können.

Mithilfe der erfindungsgemäßen Kommunikationsanordnung bzw. des erfindungsgemäßen Verfahrens kann die Bearbeitung der Sprachinformationen in der Multimediaplattform, die Ausgabe der bearbeiteten Sprachinformationen im Internetendgerät PC und die Übermittlung und das Starten von neuen Webseiteninformationen durch Austausch von Steuerinformationen beeinflusst werden. Konvertierte Sprachinformationen können direkt zwischen dem Internetendgerät und der Multimediaplattform ausgetauscht werden - Anspruch 2 und 10. Durch den direkten Austausch von Steuerinformationen und konvertierten Sprachinformationen wird eine effiziente Informationsbearbeitung gewährleistet; ein wichtiger Punkt für sprachorientierte Interaktion und Navigation beim Zugriff auf Webseiteninformationen.

Um den unterschiedlichen Anforderungen bei der Übertragung von Sprachinformationen und Daten Rechnung zu tragen, können für die Übermittlung der Sprachinformationen und der für das wechselseitige Synchronisieren vorgesehenen Daten- und Steuerinformationen zwischen dem Internetendgerät (PC) und der Multimediaplattform (VOX(TTS,ASR)) separate Übertragungskanäle vorgesehen sein - Anspruch 3 und 11. Die Übertragungskanäle können dabei z.B. durch eine auf dem TCP/IP Protokoll basierende, eine nach dem Asynchron Transfer Modus wirkende oder eine auf dem Bluetooth-Standard basierende Verbindung realisiert sein - Anspruch 4 und 12. Getrennte Übertragungskanäle bzw. verschiedene Realisierungen können Vorteile bei der Optimierung der Übertragungsqualität und der Einteilung der Ressourcen aufweisen.

Ein weiterer wesentlicher Aspekt der Erfindung ist das Internetendgerät, das mit einem Browser zum Bearbeiten und Interpretieren von Webseiteninformationen, die von einem Webserver über das Internet übermittelt sind, mit einem Sprachagenten für den direkten Kommunikationsaustausch von Sprachinformationen mit einer Multimediaplattform und mit zumindest einem Kommunikations-Agenten zur Beeinflussung von Bearbeitungsfunktionen der sprachorientierten Webseiteninformationen in der Multimediaplattform und zur Synchronisation der Bearbeitung der sprachorientierten und der bildschirmorientierten Webseiteninformationen durch die Übermittlung von Steuer- und Dateninformationen ausgestattet ist - Anspruch 5. Die Ausstattung des erfindungsgemäßen Internentendgeräts besitzt den Vorteil, die Bearbeitung von sprachorientierten Webseiteninformationen und die Kommunikation mit der Multimediaplattform zu gewährleisten, ohne dass ressourcenintensive Programmstrukturen bzw. Funktionen auf dem Internentendgerät zu implementieren sind.

Einen weiteren wichtigen Aspekt stellt die erfindungsgemäße Multimediaplattform dar, die mit einem Sprach-Browser zum Bearbeiten und Interpretieren von sprachorientierten Webseiteninformationen, die von einem Webserver über das Internet übermittelt sind, mit einem Sprachagenten für den direkten Kommunikationsaustausch von Sprachinformationen mit einem Internetendgerät PC und mit Mitteln zum Synchronisieren der mit dem Internetendgerät ausgetauschten Sprachinformationen mit den vom Webserver übermittelten sprachorientierten Webseiteninformationen ausgestattet ist - Anspruch 7. Zudem kann man ein Programm für Spracherkennung und/oder ein Programm zur Umwandlung von Text in Sprache vorsehen - Anspruch 8 und 13. Die erfindungsgemäße Multimediaplattform kann so ressourcenintensive Bearbeitungsschritte, wie Spracherkennung und die Umwandlung von Text in Sprache übernehmen. Es kann z.B. bei diesen Bearbeitungsfunktionen vorteilhaft sein, dass zur Bearbeitung der kombinierten bildschirm- und sprachorientierten Webseiteninformation auf entweder in der Multimediaplattform oder in über das Internet erreichbaren WWW Servern angeordnete Datenbanken zurückgegriffen wird - Anspruch 14. Beispielsweise erfordert die Spracherkennung von einer Vielzahl verschiedener Sprachen erhebliche Speicherressourcen. Zur Entlastung der Kommunikationsanordnung kann die Nutzung von externen Ressourcen auf WWW Servern bzw. Datenbanken vorteilhaft sein.

Im folgenden wird anhand eines Ausführungsbeispiels die erfindungsgemäße Kommunikationsanordnung und das erfindungsgemäße Verfahren näher erläutert. Es zeigen
- Fig. 1:: eine Ausführung der erfindungsgemäßen Anordnung und
- Fig. 2:: eine mögliche Realisierung eines Zugriffs auf Webseiteninformationen mithilfe eines Sprachbefehls.

Dabei bezeichnen gleiche Bezeichnungen gleiche Elemente.

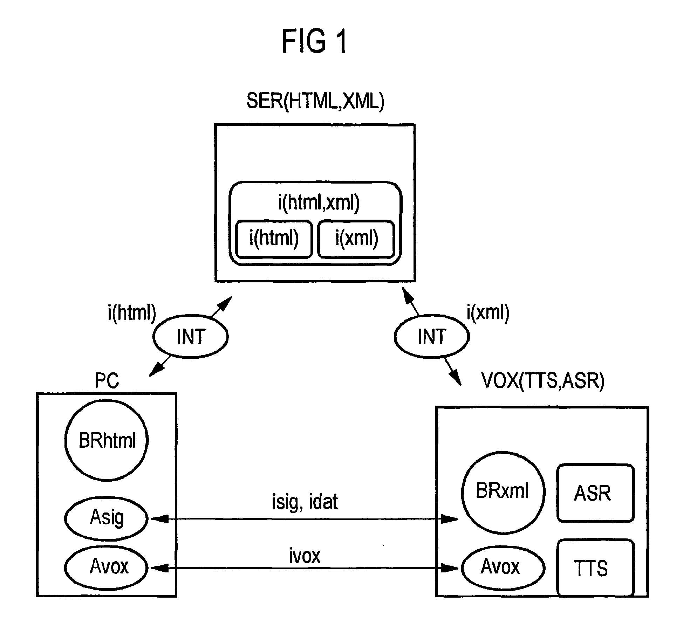

Figur 1 zeigt eine beispielsweise durch einen Rechner realisierte Multimediaplattform VOX(TTS,ASR), die mit einem Internetendgerät PC über einen Übertragungskanal für Sprachinformationen ivox und einen Übertragungskanal für Daten- und Steuerinformationen idat und isig verbunden ist. Hierzu ist die Multimediaplattform VOX(TTS,ASR) jeweils mit entsprechenden Anschlusseinheiten - nicht dargestellt - für den Anschluss an das Internet (INT) ausgestattet. Die Übertragungskanäle sind beispielsweise entsprechend dem TCP/IP (Protokollkombination von dem Transmission Control Protocol (TCP) und dem Internet Protocol (IP)) bzw. dem H.323 Protokoll (Standard zur Sprachübertragung über das Internet) realisiert. In einer bevorzugten Ausführung ist die Multimediaplattform in räumlicher Nähe des Zugangsservers des Internetdienstanbieters - nicht dargestellt - positioniert, über den das Internetendgerät PC mit dem Internet INT verbunden wird. Bei dieser Positionierung ist die Übertragungsstrecke relativ kurz, wodurch die Sprachqualität der zwischen dem Internetendgerät PC und der Multimediaplattform VOX(TTS,ASR) ausgetauschten Sprachinformationen ivox überprüft und gesteuert werden kann. Hierbei werden die Sprachinformationen ivox über keine weitverzweigten Verbindungen wie z.B. größere Strecken des Internets INT geleitet, deren Qualität sich der Kontrolle des Internetdienstanbieter entzieht. Die Multimediaplattform VOX(TTS,ASR) und das Internetendgerät PC sind mit jeweils einem Sprachagenten Avox zur Steuerung des Austausches von Sprachinformationen ivox versehen. Das Internetendgerät PC ist zudem mit einem Kommunikations-Agenten Asig ausgestattet, der die Übermittlung von Steuerinformationen isig oder zu bearbeitender Daten idat erlaubt. Zum Bearbeiten und Interpretieren von Webseiteninformationen ist das Internetendgerät mit einem Browser BRhtml versehen. Die Multimediaplattform VOX(TTS,ASR) ist zur Bearbeitung von Sprachinformationen ivox mit Programmen für Spracherkennung ASR und zur Umwandlung von Text in Sprache TTS und mit einem Sprach-Browser BRxlm zum Bearbeiten und Interpretieren von sprachorientierten Webseiteninformationen i(xml) ausgestattet.

Das Internentendgerät PC und die Multimediaplattform VOX(TTS,ASR) sind durch einen von dem Internentendgerät PC eingeleiteten Verbindungsaufbau über das Internet (INT) mit einem Webserver SER(HTML,XML) verbindbar. Von dem Webserver SER(HTML,XML) werden kombinierte bildschirm- und sprachorientierten Webseiteninformationen i(html,xml) übermittelt. Derzeit bestehen solche kombinierten bildschirm- und sprachorientierten Webseiteninformationen i(html,xml) aus getrennten bildschirmorientierten i(html) und sprachorientierten i(xml) Teilen bzw. Quellcodes, die separat abrufbar sind und separat übermittelt werden. Die sprachorientierten Teile der Webseiteninformationen i(xml) sind überwiegend in einer XML (extensible markup language) Sprache programmiert, die Sprachanwendungen unterstützt, z.B. VoxML^{™}, VoiceXML^{™} oder DialogML^{™}.

Der bildschirmorientierte Teil i(html) kann beispielsweise in der html (hypertext markup language) Programmiertechnik erstellt sein und enthält in der Regel Verweise auf den sprachorientierten Teil i(xml), die erlauben, von der Bearbeitung des bildschirmorientierten Teils i(html) zur Bearbeitung des sprachorientierten Teils i(xml) zu wechseln. Durch den auf dem Internetendgerät PC installierten Browser BRhtml wird nicht nur der bildschirmorientierte Teil i(html) bearbeitet und interpretiert, sondern auch die Verweise auf den sprachorientierten Teil i(xml) interpretiert und gegebenenfalls das Übermitteln von Steuerinformationen isig und/oder Daten idat für den Übergang zur Bearbeitung oder die Ausgabe von Sprachinformationen ivox eingeleitet. Aus diesem Grund wird in der englischsprachigen Literatur auch der Begriff *parser* statt *browser* verwendet. Anstrengungen werden dahin unternommen, die beiden Teile in einem Quellcode zu vereinigen. In diesem Falle ist die erfindungsgemäße Anordnung dahingehend anzupassen, dass entweder das Internentendgerät PC und die Multimediaplattform VOX(html,xml) mit Browsern versehen sind, die denselben, bildschirm- und sprachorientierte Webseiteninformationen vereinigende Quellcode bearbeiten und interpretieren können, oder nur ein Browser in dem Internetendgerät PC vorgesehen ist, der gegebenenfalls durch einen zusätzlichen Kommunikations-Agenten Asig in der Multimediaplattform VOX(HTML,XML) ergänzt wird.

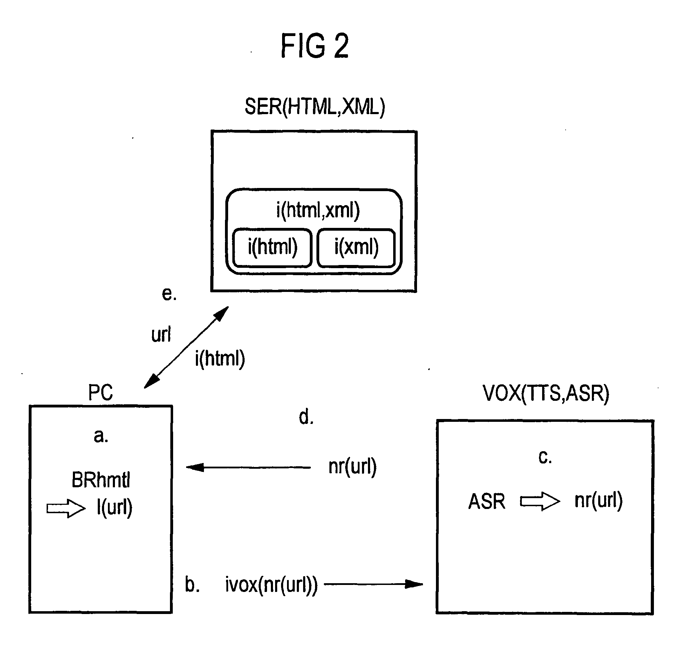

Bei Start des erfindungsgemäßen Verfahrens wird der bildschirmorientierte Teil i(html) von auf einem World Wide Web Server SER(HTML,XML) bereitgestellten bildschirm- und sprachorientierten Webseiteninformationen i(html,xml) an ein Internentendgerät PC übermittelt. Vom Internet-Endgerät PC wird über einen Übermittlungskanal für Steuerinformationen isig und Daten idat eine Nachricht gesendet, die den Beginn der Internetsitzung ankündigt und die Adresse des sprachorientierten Teils i(xml) der bildschirm- und sprachorientierten Webseiteninformationen i(html,xml) übermittelt. Von dem WWW Server SER(HTML,XML) wird dann anschließend der sprachorientierte Teil an eine Multimediaplattform VOX(TTS,ASR) übertragen. Die Bearbeitung und Interpretation des bildschirmorientierten Teils i(html) und des sprachorientierten Teils i(xml) durch einen Browser BRhtml des Internetendgeräts PC bzw. einen Sprach-Browser BRxml der Multimediaplattform VOX(TTS,ASR) wird durch den Austausch von Steuerinformationen isig synchronisiert. Sprachinformationen ivox werden über einen dafür vorgesehenen Übertragungskanal mittels Sprachagenten Avox direkt ausgetauscht, z.B. um mit einem Programm zur Spracherkennung ASR bearbeitet zu werden oder zur Ausgabe mit bei dem Internetendgerät PC dafür vorgesehenen Vorrichtungen, z.B. Lautsprecher. Exemplarisch ist in Figur 2 eine mögliche Realisierung des Starts neuer kombinierter bildschirm- und sprachorientierter Webseiteninformationen i(html,xml), während einer Internetsitzung mittels eines Sprachbefehls i-vox(nr(url)) dargestellt. Hierbei wird angenommen, dass über das bildschirmorientierte Ausgabemedium eine Liste l(url) von solchen Webseiteninformationen angegeben ist, aus denen ausgewählt werden kann.

Im folgenden sind die einzelnen Schritte der Realisierung dargestellt. Dabei sind Bearbeitungsschritte, bei denen ein Computerprogramm Daten bearbeitet, durch Blockpfeile und die Übermittlung von Daten bzw. Informationen durch mit Linien versehene Pfeile verdeutlicht.
a. Während einer Internetsitzung zeigt das Internentendgerät PC mithilfe des Browsers BRhtml z.B. auf einem Bildschirm eine Liste l(url) von kombinierter bildschirm- und sprachorientierter Webseiteninformationen i(html,xml) an.
b. Mittels eines Sprachbefehls ivox(nr(url)) wird ein Eintrag auf der Liste l(url) ausgewählt. Die Identifizierung des ausgewählten Eintrags geschieht z.B. über dessen Nummer nr. Der Sprachbefehl ivox(nr(url)) wird mit Hilfe der Sprachagenten Avox an die Multimediaplattform VOX(TTS,ASR) übermittelt.
c. Auf der Multimediaplattform VOX(TTS,ASR) konvertiert das Programm zur Spracherkennung ASP den Sprachbefehl i-vox(nr(url)) in eine Textinformation nr(url).
d. Die Textinformation nr(url) wird über den Kanal für die Übertragung von Daten- und Steuerinformationen an das Internetendgerät PC übermittelt.
e. Der Browser BRhtml des Internetendgeräts PC identifiziert anhand der Textinformation nr(url) die Adresse url der gewünschten Webseiteninformationen und greift darauf über das Internet (INT) zu. Eine Webseiteninformation i(html) wird daraufhin an das Internetendgerät PC übermittelt.

Das erfindungsgemäße Verfahren bzw. die erfindungsgemäßen Anordnungen sind nicht auf das Ausführungsbeispiel beschränkt, sondern können für die weitere Bearbeitung und Konvertierung von sprach- in bildschirmorientierten Informationen und umgekehrt eingesetzt werden, z.B. für Sprachkonvertierungen, Spracherkennung, Navigation durch Webseiteninformationen mittels Sprachbefehle, Spracheingabe und -ausgabe, etc., wobei die Multimediaplattform VOX(TTS,ASR) mit den entsprechenden Datenverarbeitungsprogrammen bzw. -funktionen und Konvertierungsprogrammen bzw. -funktionen auszustatten bzw. zu ergänzen ist.

## Patentansprüche

1. Kommunikationsanordnung
- mit einem Webserver (SER(HTML,XML)), der mit einer Multimediaplattform (VOX(TTS,ASR)) und einem Internetendgerät (PC) verbindbar ist, wobei im Rahmen einer Internetverbindung zumindest teilweise sprachorientierten Webseiteninformationen (i(xml)) an die Multimediaplattform (VOX(TTS,ASR)) und bildschirmorientierte Webseiteninformationen (i(html)) an das Internetendgerät (PC) übermittelt werden,
- mit zumindest einem Sprachagenten (Avox) in der Multimediaplattform (VOX(TTS,ASR)) und im Internetendgerät (PC) für den direkten Kommunikationsaustausch von Sprachinformationen (ivox),
- mit zumindest einem Kommunikations-Agenten (Asig) im Internetendgerät (PC) zum wechselseitigen Beeinflussen von Bearbeitungsfunktionen der sprachorientierten Webseiteninformationen (i(xml)) und zur Synchronisation der sprachorientierten und der bildschirmorientierten Webseiteninformationen (i(xlm,i(html)) durch die Übermittelung von Steuer- und Dateninformationen (isig, idat).

2. Kommunikationsanordnung nach Anspruch 1,
**dadurch gekennzeichnet,**
- **dass** die Bearbeitung der Sprachinformationen (ivox) in der Multimediaplattform (VOX(TTS,ASR)), die Ausgabe der bearbeiteten Sprachinformationen (ivox) im Internetendgerät PC und die Übermittlung und das Starten von neuen Webseiteninformationen durch Austausch von Steuerinformationen (i-sig) beeinflussbar ist und
- **dass** konvertierte Sprachinformationen (idat) direkt zwischen dem Internetendgerät (PC) und der Multimediaplattform (VOX(TTS,ASR)) austauschbar ist.

3. Kommunikationsanordnung nach einem der Ansprüche 1 oder 2
**dadurch gekennzeichnet,**
**dass** für die Übermittlung der Sprachinformationen (ivox) und der für das wechselseitige Synchronisieren vorgesehenen Daten- und Steuerinformationen (idat, isig) zwischen dem Internetendgerät (PC) und der Multimediaplattform (VOX(TTS,ASR)) separate Übertragungskanäle vorgesehen sind.

4. Kommunikationsanordnung nach einem der Ansprüche 1 bis 3
**dadurch gekennzeichnet,**
**dass** einer der Übertragungskanäle durch eine auf dem TCP/IP Protokoll basierende, eine nach dem Asynchron Transfer Modus wirkende oder eine auf dem Bluetooth-Standard basierende Verbindung realisiert ist.

5. Internetendgerät
- mit einem Browser (BRhtml) zum Bearbeiten und Interpretieren von Webseiteninformationen, die von einem Webserver (SER(HTML,XML)) über das Internet (INT) übermittelt sind,
- mit einem Sprachagenten (Avox) für den direkten Kommunikationsaustausch von Sprachinformationen (ivox) mit einer Multimediaplattform (VOX(TTS,ASR)) und
- mit zumindest einem Kommunikations-Agenten (Asig) zur Beeinflussung von Bearbeitungsfunktionen der sprachorientierten Webseiteninformationen (i(xlm)) in der Multimediaplattform (VOX(TTS,ASR)) und zur Synchronisation der Bearbeitung der sprachorientierten und der bildschirmorientierten Webseiteninformationen (i(xlm), i(html)) durch die Übermittlung von Steuer- und Dateninformationen (isig, i-dat).

6. Internetendgerät nach Anspruch 5
**dadurch gekennzeichnet,**
- **dass** die Ausgabe der bearbeiteten Sprachinformationen (i-vox) und die Übermittlung und das Starten von neuen Webseiteninformationen durch Austausch von Steuerinformationen (isig) beeinflussbar ist und
- **dass** konvertierte Sprachinformationen (idat) direkt zwischen dem Internetendgerät (PC) und der Multimediaplattform (VOX(TTS,ASR)) austauschbar ist.

7. Multimediaplattform
- mit einem Sprach-Browser (BRxml) zum Bearbeiten und Interpretieren von sprachorientierten Webseiteninformationen (i(xml)), die von einem Webserver (SER(HTML,XML)) über das Internet (INT) übermittelt sind,
- mit einem Sprachagenten (Avox) für den direkten Kommunikationsaustausch von Sprachinformationen (ivox) mit einem Internetendgerät PC,
- mit Mitteln zum Synchronisieren der mit dem Internetendgerät (PC) ausgetauschten Sprachinformationen (ivox) mit den vom Webserver (SER(HTML,XML)) übermittelten sprachorientierten Webseiteninformationen (i(xlm)).

8. Multimediaplattform nach Anspruch 7,
**dadurch gekennzeichnet,**
**dass** ein Programm für Spracherkennung (ASR) und/oder ein Programm zur Umwandlung von Text in Sprache (TTS) vorgesehen ist.

9. Verfahren zum Bearbeiten von kombinierten bildschirm- und sprachorientierten Webseiteninformationen (i(html,xml)), von denen zumindest der bildschirmorientierte Teil (i(html)) zu einem Internetendgerät (PC) und zumindest der sprachorientierte Teil (i(xml)) zu einer Multimediaplattform (VOX(TTS,ASR)) von einem Webserver (SER(HTML,XML)) im Rahmen einer Internetverbindung übermittelt werden,
- bei dem zumindest der bildschirmorientierte Teil (i(html)) durch einen Browser (BRhtml) des Internetendgeräts (PC) bearbeitet und interpretiert wird,
- bei dem zumindest der sprachorientierte Teil (i(xml)) durch einen Sprach-Browser (BRhtml) der Multimediaplattform (VOX(TTS,ASR)) bearbeitet und interpretiert wird,
- bei dem die übermittelten, zu bearbeitenden oder bearbeiteten Sprachinformationen (ivox) direkt mit Hilfe jeweils eines Sprachagenten (Avox) zwischen dem Internetendgerät (PC) und der Multimediaplattform (VOX(TTS,ASR)) ausgetauscht werden,
- bei dem zwischen dem Internetendgerät (PC) und der Multimediaplattform (VOX(TTS,ASR)) Steuer- und Dateninformationen (isig, idat) zum Beeinflussen von Bearbeitungsfunktionen der sprachorientierten Webseiteninformationen (i(xml)) in der Multimediaplattform (VOX(TTS,ASR)) und zur Synchronisation der Bearbeitung der sprachorientierten und der bildschirmorientierten Webseiteninformationen (i(xlm), i(html)) übermittelt werden.

10. Verfahren nach Anspruch 9,
**dadurch gekennzeichnet,**
- **dass** die Bearbeitung der Sprachinformationen (ivox) in der Multimediaplattform (VOX(TTS,ASR)), die Ausgabe der bearbeiteten Sprachinformationen (ivox) im Internetendgerät PC und die Übermittlung und das Starten von neuen Webseiteninformationen durch Austausch von Steuerinformationen (i-sig) beeinflusst wird und
- **dass** konvertierte Sprachinformationen (idat) direkt zwischen dem Internetendgerät (PC) und der Multimediaplattform (VOX(TTS,ASR)) ausgetauscht werden.

11. Verfahren nach einem der Ansprüche 9 oder 10
**dadurch gekennzeichnet,**
**dass** die Sprachinformationen (ivox) und die für das wechselseitige Synchronisieren vorgesehenen Daten- und Steuerinformationen (idat, isig) zwischen dem Internetendgerät (PC) und der Multimediaplattform (VOX(TTS,ASR)) über separate Übertragungskanäle übermittelt werden.

12. Verfahren nach einem der Ansprüche 9 bis 11
**dadurch gekennzeichnet,**
**dass** die Sprachinformationen (ivox) und/oder die für das wechselseitige Synchronisieren vorgesehenen Daten- und Steuerinformationen (idat, isig) über einen auf dem TCP/IP Protokoll basierenden, einen nach dem Asynchron Transfer Modus wirkenden oder einen auf dem Bluetooth-Standard basierenden Übertragungskanal übermittelt werden.

13. Verfahren nach einem der Ansprüche 9 bis 12,
**dadurch gekennzeichnet,**
**dass** in der Multimediaplattform (VOX(TTS,ASR)) Teile der Bearbeitung der kombinierten bildschirm- und sprachorientierten Webseiteninformationen (i(html,xml)) durch eine Spracherkennung (ASR) und/oder eine Umwandlung von Text in Sprache (TTS) realisiert sind.

14. Verfahren nach einem der Ansprüche 9 bis 13,
**dadurch gekennzeichnet,**
**dass** bei der Bearbeitung der kombinierten bildschirm- und sprachorientierten Webseiteninformation (i(html,xml)) auf entweder in der Multimediaplattform (VOX(TTS,ASR)) oder in über das Internet (INT) erreichbaren WWW Servern angeordnete Datenbanken zurückgegriffen wird.

## Claims

1. Communication arrangement
- with a web server (SER(HTML,XML)), which can be connected to a multimedia platform (VOX(TTS,ASR) and an internet terminal (PC), with at least partially voice-oriented web page information (i(xml)) being transmitted to the multimedia platform (VOX(TTS, ASR)) and screen-oriented web page information (i(html)) being transmitted to the internet terminal (PC) within the scope of an internet connection,
- with at least one voice agent (Avox) in the multimedia platform (VOX(TTS,ASR)) and in the internet terminal (PC) for the direct communication exchange of voice information (ivox),
- with at least one communication agent (Asig) in the internet terminal (PC) for the reciprocal influencing of processing functions of the voice-oriented web page information (i(xml)) and for synchronizing the voice-oriented and screen-oriented web page information (i(xlm,i(html)) by the transmission of control and data information (isig, idat).

2. Communication arrangement according to claim 1,
**characterized in that**
- the processing of voice information (ivox) in the multimedia platform (VOX(TTS,ASR)), the outputting of the processed voice information (ivox) in the internet terminal PC and the transmission and launch of new web page information can be influenced by the exchange of control information (isig) and
- converted voice information (idat) can be exchanged directly between the internet terminal (PC) and the multimedia platform (VOX(TTS,ASR)).

3. Communication arrangement according to one of claims 1 or 2, **characterized in that**
separate transfer channels are provided between the internet terminal (PC) and the multimedia platform (VOX(TTS,ASR))for the transmission of voice information (ivox) and the data and control information (idat, isig) provided for reciprocal synchronization.

4. Communication arrangement according to one of claims 1 to 3,
**characterized in that**
one of the transfer channels is set up by means of a connection based on the TCP/IP protocol, operating according to Asynchronous Transfer Mode or based on the Bluetooth standard.

5. Internet terminal
- with a browser (BRhtml) for processing and interpreting web page information, which is transmitted from a web server (SER(HTML,XML)) via the internet (INT),
- with a voice agent (Avox) for the direct communication exchange of voice information (ivox) with a multimedia platform (VOX(TTS,ASR)) and
- with at least one communication agent (Asig) for influencing processing functions of the voice-oriented web page information (i(xlm)) in the multimedia platform (VOX(TTS,ASR)) and for synchronizing the processing of the voice-oriented and screen-oriented web page information (i(xlm), i(html)) by the transmission of control and data information (isig, idat).

6. Internet terminal according to claim 5,
**characterized in that**
- the outputting of the processed voice information (ivox) and the transmission and launch of new web page information can be influenced by the exchange of control information (isig) and the converted voice information (idat) can be exchanged directly between the internet terminal (PC) and the multimedia platform (VOX(TTS,ASR)).

7. Multimedia platform
- with a voice browser (BRxml) for processing and interpreting voice-oriented web page information (i(xml)), which is transmitted from a web server (SER(HTML,XML)) via the internet (INT),
- with a voice agent (Avox) for the direct communication exchange of voice information (ivox) with an internet terminal (PC),
- with means for synchronizing the voice information (ivox) exchanged with the internet terminal (PC) with the voice-oriented web page information (i(xml)) transmitted from the web server (SER(HTML,XML)).

8. Multimedia platform according to claim 7,
**characterized in that**
a program for voice recognition (ASR) and/or a program for converting text to voice (TTS) is provided.

9. Method for processing combined screen-oriented and voice-oriented web page information (i(html,xml)), of which at least the screen-oriented component (i(html)) is transmitted to an internet terminal (PC) and at least the voice-oriented component (i(xml)) is transmitted to a multimedia platform (VOX(TTS,ASR)) from a web server (SER(HTML,XML)) within the scope of an internet connection,
- in which at least the screen-oriented component (i(html) is processed and interpreted by means of a browser (BRhtml) of the internet terminal (PC),
- in which at the voice-oriented component (i(xml) is processed and interpreted by means of a voice browser (BRhtml) of the multimedia platform (VOX(TTS, ASR),
- in which the transmitted voice information (ivox) to be processed or already processed is exchanged directly between the internet terminal (PC) and the multimedia platform (VOX(TTS,ASR)) in each instance using a voice agent (Avox),
- in which control and data information (isig, idat) is transmitted between the internet terminal (PC) and the multimedia platform (VOX(TTS,ASR)) to influence processing functions of the voice-oriented web page information (i(xml)) in the multimedia platform (VOX(TTS,ASR)) and to synchronize the processing of the voice-oriented and the screen-oriented web page information (i(xlm), i(html)).

10. Method according to claim 9,
**characterized in that**
- the processing of the voice information (ivox) in the multimedia platform (VOX(TTS,ASR)), the outputting of the processed voice information (ivox) in the internet terminal PC and the transmission and launch of new web page information are influenced by the exchange of control information (isig) and
- converted voice information (idat) is exchanged directly between the internet terminal (PC) and the multimedia platform (VOX(TTS,ASR)).

11. Method according to one of claims 9 or 10,
**characterized in that**
the voice information (ivox) and the data and control information (idat, isig) provided for reciprocal synchronization are transmitted via separate transfer channels between the internet terminal (PC) and the multimedia platform (VOX(TTS,ASR)).

12. Method according to one of claims 9 to 11,
**characterized in that**
the voice information (ivox) and/or the data and control information (idat, isig) provided for reciprocal synchronization are transmitted via a transfer channel based on the TCP/IP protocol, operating according to the Asynchronous Transfer Mode or based on the Bluetooth standard.

13. Method according to one of claims 9 to 12,
**characterized in that**
components of the processing of the combined screen-oriented and voice-oriented web page information (i(html,xml)) are executed in the multimedia platform (VOX(TTS,ASR)) by voice recognition (ASR) and/or conversion from text to voice (TTS).

14. Method according to one of claims 9 to 13,
**characterized in that**
during the processing of the combined screen-oriented and voice-oriented web page information (i(html,xml)) databases located either in the multimedia platform (VOX(TTS,ASR)) or in WWW servers accessible via the internet (INT) are accessed.

## Revendications

1. Système de communication comprenant
- un serveur web (SER(HTML, XML)), qui peut être relié à une plate-forme multimédia (VOX(TTS, ASR)) et à un terminal Internet (PC), des informations de pages web (i(xml)) au moins en partie orientées parole et des informations de pages web (i(xml)) orientées écran étant transmises dans le cadre d'une liaison Internet respectivement à la plate-forme multimédia (VOX(TTS, ASR)) et au terminal Internet (PC),
- au moins un agent vocal (Avox) dans la plate-forme multimédia (VOX(TTS, ASR)) et dans le terminal Internet (PC) pour l'échange de communication direct d'informations vocales (ivox),
- au moins un agent de communication (Asig) dans le terminal Internet (PC) pour l'influence réciproque de fonctions de traitement des informations de pages web (i(xml)) orientées parole et pour la synchronisation des informations de pages web (i(xlm, i(html)) orientées parole et orientées écran par la transmission d'informations de commande et de données (isig, idat).

2. Système de communication selon la revendication 1,
**caractérisé en ce que**
- le traitement d'informations vocales (ivox) dans la plate-forme multimédia (VOX(TTS, ASR)), la sortie de l'information vocale (ivox) traitée dans le terminal Internet PC et la transmission et le démarrage de nouvelles informations de pages web peuvent être influencés par l'échange d'informations de commande (isig) et
- **en ce que** des informations vocales (idat) converties peuvent être échangées directement entre le terminal Internet (PC) et la plate-forme multimédia (VOX(TTS, ASR)).

3. Système de communication selon l'une quelconque des revendications 1 ou 2, **caractérisé en ce que**
des canaux de transmission séparés sont prévus pour la transmission des informations vocales (ivox) et des informations de données et de commande (idat, isig) prévues pour la synchronisation réciproque entre le terminal Internet (PC) et la plate-forme multimédia (VOX(TTS, ASR)).

4. Système de communication selon l'une quelconque des revendications 1 ou 3, **caractérisé en ce que**
l'un des canaux de transmission est réalisé par une liaison basée sur le protocole TCP/IP, une liaison agissant selon le Asynchron Transfer Modus ou une liaison basée sur le standard Bluethooth.

5. Terminal Internet comprenant
- un navigateur (BRhtml) pour le traitement et l'interprétation d'informations de pages web, qui sont transmises par un serveur web (SER(HTML, XML)) via Internet (INT),
- un agent vocal (Avox) pour l'échange de communication direct d'informations vocales (ivox) avec une plate-forme multimédia (VOX(TTS, ASR)) et
- au moins un agent de communication (Asig) pour influencer des fonctions de traitement des informations de pages web (i(xlm)) orientées parole dans la plate-forme multimédia (VOX(TTS, ASR)) et pour la synchronisation du traitement des informations de pages web (i(xlm), i(html)) orientées parole et orientées écran, par la transmission de données de commande et de données (isig, idat).

6. Terminal Internet selon la revendication 5,
**caractérisé en ce que**
- la sortie des informations vocales (ivox) traitées et la transmission et le démarrage de nouvelles informations de pages web peuvent être influencés par l'échange d'informations de commande (isig) et
- **en ce que** des informations vocales (idat) converties peuvent être échangées directement entre le terminal Internet (PC) et la plate-forme multimédia (VOX(TTS, ASR)).

7. Plate-forme multimédia comprenant
- un navigateur vocal (BRxml) pour le traitement et l'interprétation d'informations de pages web (i(xml)) orientées parole qui sont transmises par un serveur web (SER(HTML, XML)) via Internet (INT),
- un agent vocal (Avox) pour l'échange de communication direct d'informations vocales (ivox) avec un terminal Internet PC,
- des moyens pour la synchronisation des informations vocales (ivox) échangées avec le terminal Internet (PC) avec les informations de pages web (i(xlm)) orientées parole transmises par le serveur web (SER(HTML, XML)).

8. Plate-forme multimédia selon la revendication 7,
**caractérisé en ce que**
un programme de reconnaissance vocale (ASR) et/ou un programme de conversion de texte en parole (TTS) est/sont prévu(s).

9. Procédé pour le traitement d'informations de pages web (i(html, xml)) orientées écran et orientées parole combinées, dont au moins la partie orientée écran (i(html)) est transmise à un terminal Internet (PC) et au moins la partie orientée parole (i(xml)) est transmise à une plate-forme multimédia (VOX(TTS, ASR)) par un serveur web (SER(HTML, XML)) dans le cadre d'une liaison Internet,
- dans lequel au moins la partie orientée écran (i(html)) est traitée et interprétée par un navigateur (BRhtml) du terminal Internet (PC),
- dans lequel au moins la partie orientée parole (i(xml)) est traitée et interprétée par un navigateur vocal (BRhtml) de la plate-forme multimédia (VOX(TTS, ASR)),
- dans lequel les informations vocales (ivox) transmises, à traiter ou traitées sont échangées directement à l'aide de respectivement un agent vocal (Avox) entre le terminal Internet (PC) et la plate-forme multimédia (VOX(TTS, ASR)),
- dans lequel des informations de commande et de données (isig, idat) destinées à influencer des fonctions de traitement des informations de pages web orientées parole (i(xml)) dans la plate-forme multimédia (VOX(TTS, ASR)) et à synchroniser le traitement des informations de pages web (i(xlm), i(html)) orientées parole et orientées écran sont transmises entre le terminal Internet (PC) et la plate-forme multimédia (VOX(TTS, ASR)).

10. Procédé selon la revendication 9,
**caractérisé en ce que**
- le traitement des informations vocales (ivox) dans la plate-forme multimédia (VOX(TTS, ASR)), la sortie des informations vocales (ivox) traitées dans le terminal Internet (PC) et la transmission et le démarrage de nouvelles informations de pages web sont influencés par l'échange d'informations de commande (isig) et
- **en ce que** des informations vocales (idat) converties sont échangées directement entre le terminal Internet (PC) et la plate-forme multimédia (VOX(TTS, ASR)).

11. Procédé selon l'une quelconque des revendications 9 ou 10,
**caractérisé en ce que**
les informations vocales (ivox) et les informations de données et de commande (idat, isig) prévues pour la synchronisation réciproque sont transmises entre le terminal Internet (PC) et la plate-forme multimédia (VOX(TTS, ASR)) par des canaux de transmission séparés.

12. Procédé selon l'une quelconque des revendications 9 à 11,
**caractérisé en ce que**
les informations vocales (ivox) et/ou les informations de données et de commande (idat, isig) prévues pour la synchronisation réciproque sont transmises par un canal de transmission basé sur le protocole TCP/IP, un canal de transmission agissant selon le "Asynchron Transfer Modus" ou un canal de transmission basé sur le standard Bluetooth.

13. Procédé selon l'une quelconque des revendications 9 à 12,
**caractérisé en ce que**
des parties du traitement des informations de pages web (i(html, xml)) orientées écran et parole combinées sont réalisées dans la plate-forme multimédia (VOX(TTS, ASR)) par une reconnaissance vocale (ASR) et/ou une conversion de texte en parole (TTS).

14. Procédé selon l'une quelconque des revendications 9 à 13,
**caractérisé en ce que,**
lors du traitement des informations de pages web (i(html, xml)) orientées écran et parole combinées, on a recours à des banques de données disposées soit dans la plate-forme multimédia (VOX(TTS, ASR)) soit dans des serveurs WWW accessibles par Internet (INT).
